# EUROPEAN PATENT SPECIFICATION

(11) **EP 3 412 158 B1**
(45) Date of publication and mention of the grant of the patent: **06.01.2021**
(21) Application number: 18176720.3
(22) Date of filing: 08.06.2018
(51) Int. Cl.: A24C 5/18, B65G 21/20, B65G 23/44

(54) **UNIT FOR FORMING A STREAM OF TOBACCO FOR A CIGARETTE MAKING MACHINE**
EINHEIT ZUR BILDUNG EINES TABAKSTROMS FÜR EINE ZIGARETTENHERSTELLUNGSMASCHINE
UNITÉ DE FORMATION D'UN COURANT DE TABAC POUR UNE MACHINE DE FABRICATION DE CIGARETTES

(30) Priority: 09.06.2017 IT 201700063595
(43) Date of publication of application: 12.12.2018
(73) Proprietor: G.D S.p.A., 40133 Bologna (IT)
(72) Inventor: MENGOLI, Fausto, 40037 Sasso Marconi (IT); SARTONI, Massimo, 40139 Bologna (IT); FEDERICI, Luca, 40137 Bologna (IT)
(74) Representative: Bianciardi, Ezio

(56) References cited:
- EP-A1- 2 522 237
- CN-A- 104 692 044
- DE-C- 119 858
- DE-C- 507 494
- ES-A1- 2 412 479
- FR-A1- 2 723 731
- GB-A- 2 174 804
- US-A- 3 261 452

## Description

This invention relates to a unit for forming a stream of tobacco for a cigarette making machine.

A continuous rod cigarette making machine of known type generally comprises a vertical duct for feeding a continuous flow of tobacco fibres and a suction conveyor located at one end of the feed duct. The suction conveyor comprises an endless belt looped around two or more pulleys, of which at least one is motor driven. The belt has an accumulation section which faces the feed duct and is subjected to the vacuum action defined by a suction chamber inside the belt, so that the tobacco fibres conveyed by the feed duct progressively build up along the accumulation section of the belt.

The motor-driven pulley drives the belt in such a way that its accumulation section advances along a given feed direction. The belt thus transfers the continuous layer of tobacco that builds up on its accumulation section from the end of the feed duct to a levelling device for forming the stream of tobacco.

The levelling device may be provided with two counter-rotating disc blades which are substantially tangent to each other. The two blades may be shaped in such a way as to divide the stream of tobacco into regularly alternating stretches with two different thicknesses, one greater than the other.

The stream of tobacco shaped by the levelling device is made to advance as far as a release station where the stream of tobacco is deposited on a continuous paper web.

The stream of tobacco and the paper web are then fed through a forming beam along which the paper web is wrapped around the stream of tobacco, forming a continuous cigarette rod.

Next, the rod is divided into individual cigarettes by a rotary blade cutting device which is preferably phase-adjusted to cut the continuous rod at the zone where the tobacco stream is thicker. Thus, the ends of the cigarettes are compact (reinforced) and prevent tobacco from falling out during subsequent processing stages.

The belt of the suction conveyor is generally made from filaments of plastic material (nylon, PEEK) and is pulled taut so that it can be driven by the motor-driven pulley. Appropriate tautness improves the quality of the end product because it makes the layer of tobacco more uniform and stabilizes the position of the reinforced ends.

On account of the normal tendency of plastic materials to become longer over time and on account of reduced belt thickness due to wear, the effective tautness of the belt decreases over time and drifts away from the desirable, optimum tautness. To overcome this drawback, the prior art teaches the use of a tensioning device such as, for example, a pneumatic cylinder operating on a driven pulley, around which the belt is looped, so as to guarantee that the belt is kept at the required degree of tautness at all times.

EP2522237 discloses a unit for forming a strip of tobacco in a cigarette making machine having a tensioner for adjusting the belt tension.

The Applicant has found that on account of time-variable friction, the type of tensioning device normally used is unable maintain the stability of the driven pulley which, in practice, oscillates by a few millimetres at a high frequency.

The Applicant has also found that this oscillation leads to slipping, vibrations and mechanical stresses which reduce the working life of the belt. All of this also has negative effects on the quality of the end product. For example, in the stream of tobacco which is formed progressively along the accumulation section of the belt, the thicker zones may no longer be spaced at regular intervals. As a result, the thick zones of the tobacco stream may no longer be in phase with the cutting device when the continuous rod is subsequently cut, thus having a negative effect on the quality of the end product.

This invention has for an aim to provide a unit for forming a stream of tobacco for a cigarette making machine to overcome the above mentioned disadvantages.

The technical purpose indicated and the aims specified are achieved by a unit for forming a stream of tobacco for a cigarette making machine comprising the technical features set out in the independent claim 1.

The invention is described below with reference to the accompanying drawings, which illustrate a non-limiting embodiment of it, and in which:
- Figure 1 is a schematic front view of a part of a cigarette making machine provided with a unit for forming a stream of tobacco according to this invention;
- Figure 2 shows a scaled-up view of a detail from Figure 1 according to a first embodiment;
- Figure 3 shows a scaled-up view of a detail from Figure 1 according to a second embodiment;
- Figure 4 shows a scaled-up view of a detail from Figure 1 according to a third embodiment;
- Figure 5 shows a scaled-up view of a detail from Figure 1 according to a fourth embodiment.

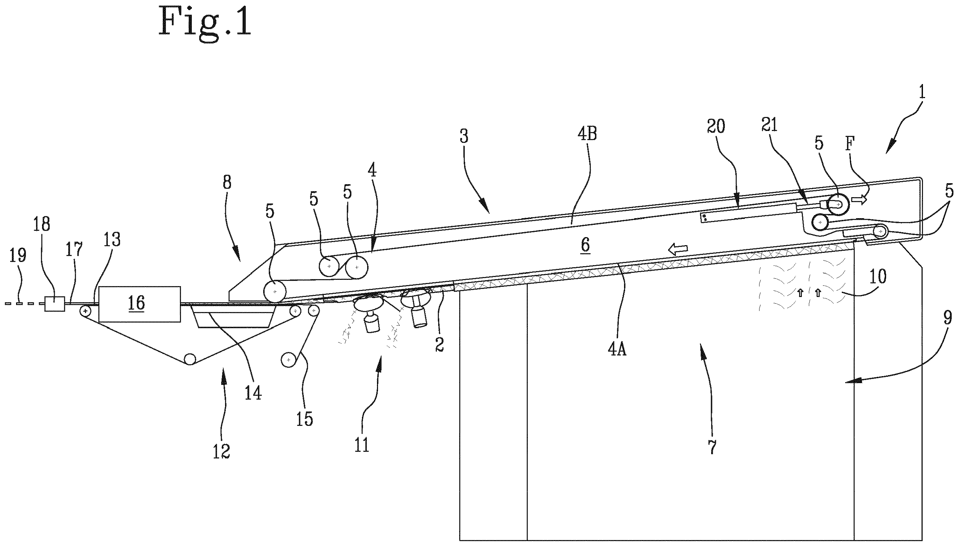

With reference to Figure 1, the numeral 1 denotes a unit for forming a stream 2 of tobacco suitable for installation in a cigarette making machine.

The forming unit 1 comprises a suction conveyor 3 comprising an endless belt 4 trained around at least two pulleys 5 which rotate about respective axes. The belt 4 has an accumulation section 4A and a return section 4B. Suction is applied at least at the accumulation section 4A. For example, the loop defined by the belt 4 accommodates a chamber 6 connected to a source of suction, not illustrated, which is in communication with the accumulation section 4A, for example through holes.

At least one of the pulleys is power driven to drive the belt 4 to cause the accumulation section 4A to advance in a feed direction "A".

The accumulation section 4A extends from a forming station 7 to a discharge station 8.

The forming station 7 comprises a feed duct 9. The accumulation section 4A is located at one end of the feed duct 9, preferably above the end of the feed duct 9. With reference to the embodiment of Figure 1, a rising air current inside the feed duct 9 moves the tobacco fibres 10 upwards and causes them to progressively accumulate along the accumulation section 4A of the belt 4 to form a continuous layer of tobacco. The accumulation section 4A retains the tobacco fibres from the feed duct 9 and feeds them in the form of a stream 2 of tobacco to the discharge station 8.

In a possible embodiment, the forming station 7 may comprise a levelling device 11 located downstream of the feed duct 9. The levelling device 11, of known type, may comprise two counter-rotating disc knives. Preferably, the two knives are peripherally provided with angularly equispaced pockets or recesses so that the levelling device 11 shapes the stream of tobacco 2 in such a way that it has cyclically alternating zones with two different thicknesses.

The conveyor 3 feeds the tobacco stream 2 from the forming station 7 to the discharge station 8. At the discharge station 8, there may be a second endless conveyor 12 extending at least partly under the accumulation section 4A. The second conveyor 12 has an upper section 13 which slides over a shelf 14.

The upper section 13 of the second conveyor 12 supports a roll-fed cigarette paper web 15. The second conveyor 12 feeds the paper web 15 together with the tobacco stream 2 from the discharge station 8 along the forming beam of known type, schematically illustrated as a block 16. More precisely, the forming beam 16 causes the paper web 15 to be progressively folded transversely around the stream 2. The opposite longitudinal edges of the paper web 15 are glued to each other in known manner by means of a gumming device, not illustrated, located at the infeed end of the forming beam 16 to form a cigarette rod 17.

A cutting head 18 cuts the continuous rod 17 transversely, thereby creating a sequence of segments 19 whose length is suitable for subsequent processes.

The unit 1 also comprises a tensioning device 20 for the belt 4. The tensioning device 20 is preferably connected to a pulley 5, specifically a driven pulley. In a possible embodiment of it, the tensioning device 20 operates along the return section 4B of the belt 4.

The tensioning device 20 comprises at least one pushing element 21 movable according to a pushing motion "X" to apply on the belt 4 a force "F" whose intensity and direction are adapted to oppose the lengthening of the belt over time.

The unit 1 also comprises a non-return device configured to prevent the pushing element 21 from effecting a return motion "Y", opposite to the pushing motion "X" so as to make the pushing motion "X" of the pushing element 21 irreversible in use.

In a possible embodiment of it, the tensioning device 20 may comprise a fluid dynamic cylinder comprising an outer jacket 22 in which there slides a piston 23 provided with a stem 24 projecting outwards from the jacket 22. The cylinder comprises the pushing element 21. For example, in a possible embodiment, the jacket 22 is fixed and the pushing element 21 is defined by, or associated with, the stem 24. Alternatively, the pushing element 21 may be defined by, or associated with, the outer jacket 22.

Inside the jacket 22, the piston 23 defines a first chamber 25 and a second chamber 26. The first chamber 25 is provided with a conduit 27 in fluid communication with a source of pressurized fluid connected to a regulating unit which keeps the pressure of the fluid in the first chamber 25 constant. Preferably, the free end of the stem 24 is provided with an eye 28 which is hinged to the shaft of the pulley 5 and coaxial therewith.

In a different embodiment, the tensioning device 20 may comprise a linear actuator comprising the pushing element 21 and a lead screw and nut drive assembly 33 operatively associated with the pushing element 21. Preferably, the pushing element 21 is defined by, or associated with, the screw 33B which is movable translationally relative to the lead nut 33A of the lead screw and nut drive assembly 33.

During operation of the unit 1, the pushing element 21 of the tensioning device 20 keeps the belt 4 taut: more specifically, it keeps the driven pulley 5 at a constantly controlled position so as to apply a predetermined force "F" to the belt 4.

Further, the pushing element 21 of the tensioning device 20 might keep the belt 4 taut: by applying a constantly controlled tensioning force "F" so as to keep a driven pulley 5 at a predetermined position. If the tensioning device 20 comprises a fluid dynamic cylinder, the source regulating unit keeps the pressure of the fluid in the first chamber 25 constant.

If the tensioning device 20 comprises a linear actuator, a drive unit keeps the pushing element 21 in pushing mode by actuating the lead screw and nut drive assembly 33.

Following wear and lengthening of the belt 4, the tensioning device 20 is actuated in the direction of the arrow "X" to bring the driven 5 pulley to the correct working position in order to compensate for wear of the belt 4 to keep the belt 4 suitably tautened.

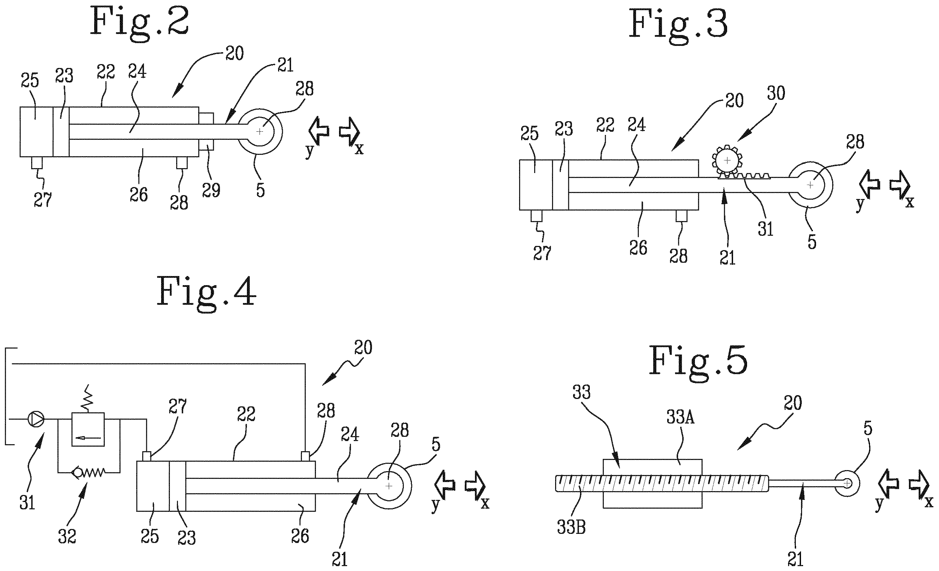

In a possible embodiment, of which Figure 2 is a non-limiting example, the non-return device comprises one-way blocks 29 operatively associated with the cylinder, specifically with the pushing element 21, preferably with the stem 24. In Figure 2, the cylinder is preferably pneumatic.

The one-way blocks 29 are configured to allow the pushing element 21 to move only in the pushing direction "X". More specifically, the structure of the one-way blocks 29 and of the pushing element 21 allows the pushing element 21 to move in the pushing direction indicated by the arrow "X" to apply the force "F" on the belt 4. More specifically, the structure of the one-way blocks 29 and of the pushing element 21 prevents the pushing element 21 from moving back in the return direction indicated by the arrow "Y" following the action applied by the belt 4 on the pushing element 21.

In a possible embodiment, of which Figure 3 is a non-limiting example, the non-return device comprises at least one pinion 30 that meshes with a rack 31. In the example illustrated in Figure 3, the rack 31 is operatively associated with the pushing element 21, preferably with the stem 24. Alternatively, the part operatively associated with the pushing element 21, preferably with the stem 24, might be the pinion 30. In Figure 3, the cylinder is preferably pneumatic.

The pinion 30 is associated with a free wheel or non-return bearing configured to allow the pushing element 21 to move only in the pushing direction "X". More specifically, the structure of the free wheel 30 allows the pushing element 21 to advance in the direction indicated by the arrow "X" to apply the force "F" on the belt 4 and prevents the pushing element 21 from moving back in the return direction indicated by the arrow "Y" following the action applied by the belt 4 on the pushing element 21.

In a possible embodiment, of which Figure 4 is a non-limiting example, the tensioning device 20 comprises a hydraulic cylinder comprising the pushing element 21 and associated with a delivery line 31 configured to move the pushing element 21 in the pushing direction. The delivery line 31 comprises a one-way valve 32 configured to prevent movement in the return direction. For example, in a possible embodiment, the jacket 22 is fixed and the pushing element 21 is defined by, or associated with, the stem 24. Alternatively, the pushing element 21 may be defined by, or associated with, the outer jacket 22.

Thanks to the incompressibility of the fluid used, the one way valve 32 allows the pushing element 21 to advance in the direction indicated by the arrow "X" to apply the force "F" on the belt 4 and prevents the pushing element 21 from moving back in the return direction indicated by the arrow "Y" following the action applied by the belt 4 on the pushing element 21.

In a possible embodiment, of which Figure 5 is a non-limiting example, the tensioning device 20 comprises an irreversible linear actuator comprising an irreversible lead screw and nut drive assembly 33 operatively associated with the pushing element 21. Preferably, the irreversible lead screw and nut drive assembly 33 comprises a screw 33B associated with or defining the pushing element 21 and a nut 33A associated with at least one free wheel or non-return bearing configured to allow only the pushing motion "X" of the pushing element 21. More specifically, the structure of the lead screw and nut drive assembly 33 allows the pushing element 21 to advance in the direction indicated by the arrow "X" to apply the force "F" on the belt 4 and prevents the pushing element 21 from moving back in the return direction indicated by the arrow "Y" following the action applied by the belt 4 on the pushing element 21.

In the cigarette making machine, the tobacco fibres 10 are held down by suction on the belt 4 which slides in the feed direction "A". The belt 4 is kept taut by the tensioning device 20. The invention achieves the preset aims by preventing the pushing element, preferably the driven pulley, from moving back in the return direction and from slackening the belt 4. In other words, the tensioning device 20 is, in use, irreversible.

In an alternative embodiment, not illustrated, the tensioning device 20 operates directly on at least one portion of the belt 4 of the conveyor 3.

## Claims

1. A unit (1) for forming a stream (2) of tobacco for a cigarette making machine; the unit comprising:
- a suction conveyor (3) adapted to be placed at one end of a feed duct (9) for a continuous flow of tobacco fibres (10), wherein the suction conveyor (3) comprises a belt (4) with a suction accumulation section (4A) extending between a forming station (7) and a discharge station (8), wherein the belt (4) is closed in a loop around at least two pulleys (5), at least one of which is power driven to drive the belt (4) to cause the accumulation section (4A) to advance in a feed direction (A), the accumulation section (4A) being adapted to retain the tobacco fibres (10) and to feed them in the form of a stream (2) of tobacco to the discharge station (8),
- a tensioning device (20) comprising at least one pushing element (21) movable according to a pushing motion (X) to apply on the belt (4) a force (F) whose intensity and direction are adapted to oppose the lengthening of the belt (4) over time,
**characterized in that** it comprises a non-return device configured to prevent the pushing element (21) from effecting a return motion (Y), opposite to the pushing motion (X), so as to make the pushing motion (X) of the pushing element (21) irreversible in use.

2. The unit according to claim 1, **characterized in that** the non-return device comprises one-way blocks (29) operatively associated with the pushing element (21) and configured to allow only the pushing motion (X).

3. The unit according to claim 2, **characterized in that** the tensioning device (20) comprises a cylinder, preferably pneumatic, comprising the pushing element (21) and **in that** the one-way blocks (29) are operatively associated with the cylinder.

4. The unit according to claim 1, **characterized in that** the non-return device comprises at least one pinion (30) meshed with a rack (31), the pinion (30) or the rack (31) being operatively associated with the pushing element (21), the pinion (30) being associated with a free wheel or non-return bearing configured to allow only the pushing motion (X).

5. The unit according to claim 4, **characterized in that** the tensioning device (20) comprises a cylinder, preferably pneumatic, comprising the pushing element (21) and **in that** the rack (31) or the pinion (30) is operatively associated with the cylinder.

6. The unit according to claim 1, **characterized in that** the tensioning device (20) comprises an irreversible linear actuator comprising an irreversible lead screw and nut drive assembly (33) operatively associated with the pushing element (21) and configured to allow only the pushing motion (X) of the pushing element (21).

7. The unit according to claim 6, **characterized in that** the irreversible lead screw and nut drive assembly (33) comprises a screw (33B) associated with or defining the pushing element (21) and a nut (33A) associated with at least one free wheel or non-return bearing configured to allow only the pushing motion (X) of the pushing element (21).

8. The unit according to claim 1, **characterized in that** the tensioning device (20) comprises a hydraulic cylinder comprising the pushing element (21) and a delivery line (31) configured to effect the pushing motion (X) of the pushing element (21), the delivery line (31) comprising a one-way valve (32) adapted to prevent the return motion (Y).

9. The unit according to any one of the preceding claims, **characterized in that** the pushing element (21) is connected to at least one of the pulleys (5), preferably a driven pulley.

10. The unit according to any one of the preceding claims, **characterized in that** the tensioning device (20) acts along at least one return section (4B) of the belt (4).

## Patentansprüche

1. Einheit (1) zur Bildung eines Tabakstrangs (2) für eine Zigarettenherstellungsmaschine, umfassend:
- einen Saugförderer (3), der ausgelegt ist, um an einem Ende einer Zuführungsleitung (9) für einen durchgehenden Strom von Tabakfasern (10) platziert zu werden, wobei der Saugförderer (3) ein Band (4) mit einer Saugakkumulationssektion (4A) umfasst, sich erstreckend zwischen einer Bildungsstation (7) und einer Entladestation (8), wobei das Band (4) in einer Schleife rund um mindestens zwei Riemenscheiben (5) geschlossen ist, von denen mindestens eine motorisch betrieben ist, um das Band (4) anzutreiben, sodass die Akkumulationssektion (4A) in einer Zuführungsrichtung (A) vorgeschoben wird, wobei die Akkumulationssektion (4A) ausgelegt ist, um die Tabakfasern (10) zu halten und diese der Entladestation (8) in Form eines Tabakstrangs (2) zuzuführen;
- eine Spannvorrichtung (20), umfassend mindestens ein Schiebeelement (21), das nach einer Schiebebewegung (X) bewegbar ist, um auf das Band (4) eine Kraft (F) auszuüben, deren Stärke und Richtung ausgelegt sind, um der Verlängerung des Bands (4) im Lauf der Zeit entgegenzuwirken,
**dadurch gekennzeichnet, dass** sie eine Rückschlagvorrichtung umfasst, die konfiguriert ist, um zu vermeiden, dass das Schiebeelement (21) eine Rückwärtsbewegung (Y) ausführt, die der Schiebebewegung (X) entgegengesetzt ist, sodass dafür gesorgt wird, dass die Schiebebewegung (X) des Schiebeelements (21) in Verwendung irreversibel ist.

2. Einheit nach Anspruch 1, **dadurch gekennzeichnet, dass** die Rückschlagvorrichtung Einwegblöcke (29) umfasst, die betriebswirksam mit dem Schiebeelement (21) assoziiert und konfiguriert sind, um nur die Schiebebewegung (X) zu erlauben.

3. Einheit nach Anspruch 2, **dadurch gekennzeichnet, dass** die Spannvorrichtung (20) einen Zylinder umfasst, der vorzugsweise pneumatisch ist, umfassend das Schiebeelement (21), und dass die Einwegblöcke (29) betriebswirksam mit dem Zylinder assoziiert sind.

4. Einheit nach Anspruch 1, **dadurch gekennzeichnet, dass** die Rückschlagvorrichtung mindestens ein Ritzel (30) umfasst, das mit einer Zahnstange (31) im Eingriff ist, wobei das Ritzel (30) oder die Zahnstange (31) betriebswirksam mit dem Schiebeelement (21) assoziiert ist, wobei das Ritzel (30) mit einem frei laufenden Rad oder einem Rückschlaglager assoziiert ist, konfiguriert, um nur die Schiebebewegung (X) zu erlauben.

5. Einheit nach Anspruch 4, **dadurch gekennzeichnet, dass** die Spannvorrichtung (20) einen Zylinder umfasst, der vorzugsweise pneumatisch ist, umfassend das Schiebeelement (21), und dass die Zahnstange (31) oder das Ritzel (30) betriebswirksam mit dem Zylinder assoziiert ist.

6. Einheit nach Anspruch 1, **dadurch gekennzeichnet, dass** die Spannvorrichtung (20) einen selbsthemmenden Linearantrieb umfasst, umfassend eine selbsthemmende Antriebsanordnung (33) mit Leitspindel und Mutter, die betriebswirksam mit dem Schiebeelement (21) assoziiert und konfiguriert ist, um nur die Schiebebewegung (X) des Schiebeelements (21) zu erlauben.

7. Einheit nach Anspruch 6, **dadurch gekennzeichnet, dass** die selbsthemmende Antriebsanordnung (33) mit Leitspindel und Mutter eine Spindel (33B), die mit dem Schiebeelement (21) assoziiert ist oder dieses definiert, und eine Mutter (33A) umfasst, die mit mindestens einem frei laufenden Rad oder einem Rückschlaglager assoziiert ist, konfiguriert, um nur die Schiebebewegung (X) des Schiebeelements (21) zu erlauben.

8. Einheit nach Anspruch 1, **dadurch gekennzeichnet, dass** die Spannvorrichtung (20) einen Hydraulikzylinder umfasst, umfassend das Schiebeelement (21), und eine Versorgungsanlage (31), konfiguriert, um die Schiebebewegung (X) des Schiebeelements (21) auszuführen, wobei die Versorgungsanlage (31) ein Einwegventil (32) umfasst, das ausgelegt ist, um die Rückwärtsbewegung (Y) zu verhindern.

9. Einheit nach einem der vorhergehenden Ansprüche, **dadurch gekennzeichnet, dass** das Schiebeelement (21) mit mindestens einer der Riemenscheiben (5) verbunden ist, vorzugsweise einer angetriebenen Riemenscheibe.

10. Einheit nach einem der vorhergehenden Ansprüche, **dadurch gekennzeichnet, dass** die Spannvorrichtung (20) entlang von mindestens einer Rücklaufsektion (48) des Bands (4) wirkt.

## Revendications

1. Unité (1) de formation d'un boudin (2) de tabac pour une machine de fabrication de cigarettes ; l'unité comprenant :
- un convoyeur aspirant (3) adapté pour être placée à une extrémité d'un conduit d'alimentation (9) pour un flux continu de fibres de tabac (10), dans laquelle le convoyeur aspirant (3) comprend une courroie (4) dotée d'une section d'accumulation par aspiration (4A) se prolongeant entre un poste de formation (7) et un poste de déchargement (8), dans laquelle la courroie (4) est fermée en boucle autour d'au moins deux poulies (5), dont au moins une est motorisée pour entraîner la courroie (4) afin de faire avancer la section d'accumulation (4A) dans une direction d'alimentation (A), la section d'accumulation (4A) étant adaptée pour retenir les fibres de tabac (10) et pour les alimenter sous la forme d'un boudin (2) de tabac au poste de déchargement (8),
- un dispositif de tension (20) comprenant au moins un élément de poussée (21) mobile selon un mouvement de poussée (X) pour appliquer sur la courroie (4) une force (F) dont l'intensité et la direction sont adaptées pour s'opposer à l'allongement de la courroie (4) dans le temps,
**caractérisée en ce qu'**elle comprend un dispositif de non-retour configuré pour empêcher à l'élément de poussée (21) d'effectuer un mouvement de retour (Y), opposé au mouvement de poussée (X), de manière à rendre le mouvement de poussée (X) de l'élément de poussée (21) irréversible en fonctionnement.

2. Unité selon la revendication 1, **caractérisée en ce que** le dispositif de non-retour comprend des blocs unidirectionnels (29) associés de manière fonctionnelle à l'élément de poussée (21) et configurés pour permettre uniquement le mouvement de poussée (X).

3. Unité selon la revendication 2, **caractérisée en ce que** le dispositif de tension (20) comprend un cylindre, de préférence pneumatique, comprenant l'élément de poussée (21) et **en ce que** les blocs unidirectionnels (29) sont associés de manière fonctionnelle au cylindre.

4. Unité selon la revendication 1, **caractérisée en ce que** le dispositif de non-retour comprend au moins un pignon (30) engrené à une crémaillère (31), le pignon (30) ou la crémaillère (31) étant associé de manière fonctionnelle à l'élément de poussée (21), le pignon (30) étant associé à une roue libre ou à un palier de non-retour configuré pour ne permettre que le mouvement de poussée (X).

5. Unité selon la revendication 4, **caractérisée en ce que** le dispositif de tension (20) comprend un cylindre, de préférence pneumatique, comprenant l'élément de poussée (21) et **en ce que** la crémaillère (31) ou le pignon (30) est associé de manière fonctionnelle au cylindre.

6. Unité selon la revendication 1, **caractérisée en ce que** le dispositif de tension (20) comprend un actionneur linéaire irréversible comprenant un ensemble d'entraînement irréversible (33) à vis-mère et écrou associé de manière fonctionnelle à l'élément de poussée (21) et configuré pour ne permettre que le mouvement de poussée (X) de l'élément de poussée (21).

7. Unité selon la revendication 6, **caractérisée en ce que** l'ensemble d'entraînement irréversible (33) à vis-mère et écrou comprend une vis (33B) associée à ou définissant l'élément de poussée (21) et un écrou (33A) associé à au moins une roue libre ou un palier de non-retour configuré pour ne permettre que le mouvement de poussée (X) de l'élément de poussée (21).

8. Unité selon la revendication 1, **caractérisée en ce que** le dispositif de tension (20) comprend un cylindre hydraulique comprenant l'élément de poussée (21) et une conduite de refoulement (31) configurée pour effectuer le mouvement de poussée (X) de l'élément de poussée (21), la conduite de refoulement (31) comprenant une soupape unidirectionnelle (32) adaptée pour empêcher le mouvement de retour (Y).

9. Unité selon l'une quelconque des revendications précédentes, **caractérisée en ce que** l'élément de poussée (21) est relié à au moins une des poulies (5), de préférence une poulie entraînée.

10. Unité selon l'une quelconque des revendications précédentes, **caractérisée en ce que** le dispositif de tension (20) agit le long d'au moins une section de retour (48) de la courroie (4).
